# EUROPÄISCHE PATENTSCHRIFT

(11) **EP 1 444 881 B1**
(45) Veröffentlichungstag und Bekanntmachung des Hinweises auf die Patenterteilung: **13.01.2010**
(21) Anmeldenummer: 04100094.4
(22) Anmeldetag: 13.01.2004
(51) Int. Cl.: A01D 69/00, B60K 17/24

(54) **Antriebssystem für einen Erntevorsatz einer Erntemaschine**
Drive system for the harvesting attachment of a harvesting machine
Système d'entraînement pour le système de récolte d'une machine de récolte

(30) Priorität: 24.01.2003 DE 10302694
(43) Veröffentlichungstag der Anmeldung: 11.08.2004
(73) Patentinhaber: Maschinenfabrik Kemper GmbH & Co. KG, 48973 Stadtlohn (DE)
(72) Erfinder: Rickert, Clemens, 48703 Stadtlohn (DE)
(74) Vertreter: Holst, Sönke

(56) Entgegenhaltungen:
- EP-A- 0 063 531
- DE-A1- 2 124 341
- DE-A1- 3 512 619
- DE-A1- 4 008 538
- US-A- 5 778 644
- US-A1- 2002 189 887

## Beschreibung

Die Erfindung betrifft ein für einen Erntevorsatz einer Erntemaschine, mit einer Gelenkwelle mit variabler Länge, die an einem ersten Ende eine erste Gelenkverbindung aufweist, welche über ein Antriebselement mit einer ersten Welle, die mit einem Antriebsmotor einer Erntemaschine in Antriebsverbindung steht, in Antriebsverbindung bringbar ist, und an ihrem zweiten Ende eine zweite Gelenkverbindung aufweist, die über ein Abtriebselement mit einer Antriebswelle, die mit Ernteeinrichtungen des Erntevorsatzes in Antriebsverbindung steht, in Antriebsverbindung bringbar ist.

Im Stand der Technik werden Schneidwerke für Mähdrescher in der Regel über Gelenkwellen angetrieben, die sich zwischen einer Erntevorsatzantriebswelle, die mit der unteren Schrägfördererwalze gekoppelt ist, und einem oder beiden seitlichen Enden des Erntevorsatzes erstrecken, d. h. im Wesentlichen quer zur Fahrtrichtung (s. DE 199 18 550 A). In der DE 35 12 619 A wird ein Schneidwerk beschrieben, das vom Schrägförderer her durch eine sich quer zur Vorwärtsrichtung erstreckende Gelenkwelle angetrieben wird. Eine von der Gelenkwelle angetriebene Welle treibt über eine Kette eine Querförderschnecke und über ein Kegelradgetriebe und eine weitere, sich in Vorwärtsrichtung erstreckende Gelenkwelle, deren Länge variabel ist, einen Messerantrieb an.

Insbesondere, falls das Schneidwerk an seiner Aufhängung am Schrägförderer eine Pendelbewegung um eine horizontale, in Fahrtrichtung verlaufende Achse vollführen soll, finden teleskopierbare Gelenkwellen Verwendung. Bevor das Schneidwerk zum Transport vom Mähdrescher getrennt werden kann, ist die Gelenkwelle manuell vom Schrägförderer abzunehmen und vor der Aufnahme eines weiteren Erntevorgangs wieder anzubringen, was einen nicht unerheblichen Zeitaufwand bedeutet.

Einige Typen von Erntevorsätzen, insbesondere zur Maisernte, sind mit in eine Transportstellung hochschwenkbaren Seitenteilen versehen, die an einem Mittelteil angelenkt sind. Bei diesen Erntevorsätzen erstreckt sich in der Regel eine teleskopierbare Gelenkwelle zwischen der Erntevorsatzantriebswelle des Einzugsgehäuses und dem äußeren Rand des Mittelteils. Die Gelenkwelle treibt eine Antriebswelle des Mittelteils an, die mit den einzelnen Einzugs- und Pflückeinrichtungen in Antriebsverbindung steht. Die Antriebswellen der Seitenteile werden wiederum durch lösbare Kupplungen mit der Antriebswelle des Mittelteils verbunden. Beim Hochschwenken der Außenteile werden die Kupplungen selbsttätig aufgetrennt. Sie schließen sich beim Herunterschwenken selbsttätig wieder. Als nachteilig ist anzusehen, dass die Gelenkwelle wegen des recht geringen zur Verfügung stehenden Raums - insbesondere bei Erntevorsätzen, die pendelnd an einem Mähdrescher mit Hangausrüstung angebracht sind - einen relativ hohen Winkel- und Längenänderungsbereich ermöglichen muss. Es sind daher recht aufwändige und kostenintensive Gelenkwellen erforderlich, die wegen der großen Winkeländerungen einem nicht unerheblichen Verschleiß unterliegen.

Bei anderen Ausführungsformen ist der Schrägförderer durch kurze Wellen mit lösbaren Kupplungen des Erntevorsatzes gekoppelt, die mit Gelenkwellen verbunden sind. Die Gelenkwellen treiben die Seitenteile an, welche wiederum durch weitere lösbare Kupplungen mit den angetriebenen Einrichtungen des Mittelteils in Antriebsverbindung stehen. Beim Hochschwenken der Seitenteile werden die Kupplungen selbsttätig aufgetrennt. Sie schließen sich beim Herunterschwenken auch selbsttätig wieder. Derartige Erntevorsätze können jedoch keine Pendelbewegung durchführen. Bei wiederum anderen Ausführungsformen ist eine teleskopierbare Gelenkwelle zwischen dem Schrägförderer und den Außenseiten vorhanden. Sie ermöglicht zwar eine Pendelbewegung, erfordert jedoch ein manuelles Abnehmen der Gelenkwelle, bevor die Seitenteile in die Transportposition verbracht werden können.

In der US 6 370 853 B wird ein Antriebssystem für die Reiheneinheiten eines Maispflückers beschrieben. An einer sich quer zur Fahrtrichtung des Mähdreschers erstreckenden, an der Vorderseite des Schrägförderers angebrachten Ausgangswelle ist ein Winkelgetriebe angebracht, von dem sich eine Welle nach vorn zum Maispflücker erstreckt. Dort treibt sie über ein Winkelgetriebe ein Schaltgetriebe an, das wiederum über ein schwenkbar am Pflücker angelenktes Winkelgetriebe und eine sich in Fahrtrichtung erstreckende Welle die quer zur Fahrtrichtung verlaufende Hauptantriebswelle zum Antrieb der Reiheneinheiten antreibt. Eine Pendelbewegung des Maispflückers am Schrägförderer wird nicht erwähnt und wäre aufgrund der Getriebeanordnung auch nicht möglich.

Das der Erfindung zu Grunde liegende Problem wird darin gesehen, ein verbessertes Antriebssystem für einen Erntevorsatz bereitzustellen, bei dem die oben erwähnten Nachteile nicht oder nur in einem verminderten Maß vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Antriebssystem umfasst eine teleskopierbare Gelenkwelle, die eine erste Gelenkverbindung aufweist, welche über ein Antriebselement mit einer ersten Welle koppelbar ist. Die erste Welle ist mit einem Antriebsmotor der insbesondere selbstfahrenden Erntemaschine gekoppelt, bei dem es sich in der Regel um einen Verbrennungsmotor handelt; er könnte aber auch ein Hydraulikmotor oder ein Planetengetriebe sein, das die Drehung des Antriebsmotors mit einem verstellbaren Hydraulikmotor überlagert. Anderen Endes weist die Gelenkwelle eine (zweite) Gelenkverbindung auf, die über ein Abtriebselement direkt oder indirekt mit einer Antriebswelle des Erntevorsatzes koppelbar ist. Die Antriebswelle steht mit Ernteeinrichtungen des Erntevorsatzes in Antriebsverbindung, bei denen es sich beispielsweise um Einzugs- und Pflückeinrichtungen, Mäh- und Einzugstrommeln, eine Querförderschnecke, Haspel und/oder einen Messerbalken handeln kann. Ist der Erntevorsatz pendelnd (d. h. um eine sich in der Fahrtrichtung erstreckende Achse schwenkbar) oder anderweitig bewegbar an der Erntemaschine angebracht, ändert sich bei einer Relativbewegung zwischen Erntemaschine und Erntevorsatz die Länge der ausziehbaren Gelenkwelle, außerdem ändert sich auch der Winkel zwischen der ersten Welle und der Antriebswelle des Erntevorsatzes. Damit die (kardanischen) Gelenkverbindungen der Gelenkwelle nicht den gesamten auftretenden Winkelbereich aufnehmen müssen, wird vorgeschlagen, dass Mittel vorhanden sind, die das Antriebselement und das Abtriebselement bei derartigen Winkeländerungen zumindest näherungsweise parallel ausrichten.

Auf diese Weise vermeidet man größere Knickwinkel an der Gelenkwelle, so dass ein kompakter Aufbau des Antriebssystems realisierbar ist. Auch bei größeren Schwenkwinkeln und/oder anderen Bewegungen zwischen Erntevorsatz und Erntemaschine erübrigt sich eine Verwendung von aufwändigen, kostenträchtigen und großen Weitwinkelgelenken in der Gelenkwelle.

In einer bevorzugten Ausführungsform sind das Antriebselement und das Abtriebselement in jeweils einer ihnen zugeordneten Halterung drehbar gelagert und die Halterungen untereinander durch eine Verbindungseinrichtung gekoppelt. Sie bewirkt, dass die Halterungen und somit das An- und Abtriebselement stets zumindest etwa parallel zueinander ausgerichtet sind. Da die Gelenkwelle längenveränderlich ist, bietet es sich an, auch die Verbindungseinrichtung längenveränderbar zu gestalten.

Bei gegenüber der Erntemaschine im Erntebetrieb bewegbaren bzw. verstellbaren Erntevorsätzen ist neben der Abstandsänderung zwischen dem Antriebselement und dem Abtriebselement auch eine Drehbewegung der zweiten Halterung gegenüber der ersten Halterung um die Längsachse der Gelenkwelle möglich. Die Verbindungseinrichtung ist vorzugsweise geeignet, diese Drehbewegung aufzunehmen. Sie kann dazu beispielsweise in sich drehbar und/oder tordierbar gestaltet sein.

Im Falle einer Relativbewegung zwischen Erntevorsatz und Erntemaschine kann sich das Abtriebselement, wie oben erläutert, gegenüber dem Antriebselement um einen bestimmten Winkelbereich drehen. Damit sie durch die Verbindungseinrichtung parallel zueinander ausgerichtet werden können, ist es zweckmäßig, wenn ihre Halterungen jeweils um quer zur Längsachse der Gelenkwelle verlaufende Achsen schwenkbar gelagert sind, die erste Halterung in der Regel an der Erntemaschine und die zweite Halterung am Erntevorsatz. Diese Schwenkachsen entsprechen vorzugsweise den durch die Bewegung des Erntevorsatzes gegenüber der Erntemaschine vorgegebenen Achsen, um die sich auch die Gelenkwelle bewegt.

Beispielsweise, wenn der Erntevorsatz pendelnd an der Erntemaschine aufgehängt ist, ergibt sich eine Bewegung der zweiten Halterung gegenüber der ersten Halterung in der quer zur Längsachse der Gelenkwelle verlaufenden Ebene, die zweckmäßigerweise auch die Verbindungseinrichtung vollführen können sollte. Dabei wird die Bewegung in einer Richtung durch die oben genannten Schwenkachsen der Halterungen ermöglicht, die wiederum durch die Bewegung des Erntevorsatzes gegenüber der Erntemaschine vorgegeben sind. In der jeweils anderen Richtung kann die Beweglichkeit der Verbindungseinrichtung dadurch erzielt werden, dass sie an beiden Halterungen um eine quer zur Längsachse der Gelenkwelle und quer zur Schwenkachse der Halterungen verlaufende Achse drehbar angelenkt ist.

In einer bevorzugten Ausführungsform ist die Verbindungseinrichtung als zweiteilige Umhüllung ausgeführt. Die Umhüllung umschließt zumindest die Gelenkwelle, vorzugsweise auch zumindest Teile der Halterungen, die in ihnen zugeordneten Gehäusen angeordnet sein können. Ein erstes Teil der Umhüllung ist mit der ersten Halterung verbunden, während ein zweites Teil der Umhüllung mit der zweiten Halterung verbunden ist. Das erste und zweite Teil der Umhüllung sind teleskopierbar gekoppelt und zueinander drehbar, so dass die oben genannten Bewegungen vollführt werden können.

Es bietet sich an, die erste Welle an der Vorderseite des Einzugsgehäuses einer Erntemaschine anzubringen, z. B. am Schrägförderer eines Mähdreschers oder am Einzugskanal eines Feldhäckslers. Sie erstreckt sich in der Regel horizontal und quer zur Fahrtrichtung. Die Erfindung ermöglicht es auch bei einer derartigen Konfiguration der ersten Welle, sich die Gelenkwelle in platzsparender Weise in Fahrtrichtung erstrecken zu lassen. Zwischen der ersten Welle und der Gelenkwelle ist dann ein Winkelgetriebe angeordnet, das beispielsweise Kegelräder oder eine Kombination aus einem Zahnrad und einer Schnecke umfassen kann.

Die Antriebswelle ist in an sich bekannter Weise am Erntevorsatz angebracht. In der Regel ist sie die sich über die Breite des Erntevorsatzes erstreckende Hauptantriebswelle, obwohl auch die Verwendung einer Zwischenwelle zwischen dem Abtriebselement der Gelenkwelle und der Antriebswelle denkbar wäre, die sich in der Fahrtrichtung oder einer beliebigen anderen Richtung erstrecken kann. Das Abtriebselement kann die Antriebswelle bzw. die Zwischenwelle über beliebige Getriebe, z. B. T- oder Winkelgetriebe mit Kegelzahnrädern, eine weitere Gelenkwelle oder dgl. antreiben.

Der am Einzugsgehäuse der Erntemaschine angebrachte Erntevorsatz kann beliebiger Art sein, z. B. ein Maisgebiss, Maispflücker, eine Pick-Up oder ein Schneidwerk. Die Gelenkwelle kann sich vom Einzugsgehäuse der Erntemaschine in seitlicher Richtung erstrecken, wie in der DE 199 18 550 A, oder schräg nach vorn, so dass sie mit dem Randbereich eines Mittelteils eines Erntevorsatzes gekoppelt ist, der mit einem oder zwei in eine Transportstellung hochschwenkbaren (oder anderweitig bewegbaren) Seitenteilen ausgestattet ist.

Insbesondere bei derartigen Erntevorsätzen bietet es sich jedoch an, die Gelenkwelle zumindest etwa in der Fahrtrichtung oder in einem Winkelbereich bis etwa 45° nach vorn auszurichten. Man erhält eine kompakte Anordnung der Gelenkwelle und einen großen möglichen Pendelwinkelbereich, so dass der Erntevorsatz auch an Mähdreschern oder anderen Erntemaschinen mit Hangausrüstung verwendbar ist. Man erhält auf diese Weise auch die Möglichkeit, den Erntevorsatz in einer Bauform mit dem erfindungsgemäßen Antriebssystem für Hangmähdrescher anzubieten und in einer anderen Bauform, die sich nur dadurch unterscheidet, dass anstelle des erfindungsgemäßen Antriebssystems eine konventionelle - ggf. teleskopierbare - Gelenkwelle verwendet wird, für die Verwendung an Mähdreschern oder anderen Erntemaschinen ohne Hangausrüstung anzubieten.

In den Zeichnungen ist ein nachfolgend näher beschriebenes Ausführungsbeispiel der Erfindung dargestellt. Es zeigt:
- Fig. 1: eine schematische, teilgeschnittene Seitenansicht eines Mähdreschers mit einem Erntevorsatz,
- Fig. 2: eine perspektivische, schematische Ansicht eines Antriebssystems für den Erntevorsatz aus Figur 1,
- Fig. 3: eine teilgeschnittene Ansicht des Antriebssystems aus Figur 2,
- Fig. 4: einen Schnitt durch das erste Winkelgetriebe des Antriebssystems der Figuren 2 und 3, und
- Fig. 5: einen Schnitt durch das zweite Winkelgetriebe des Antriebssystem der Figuren 2 und 3.

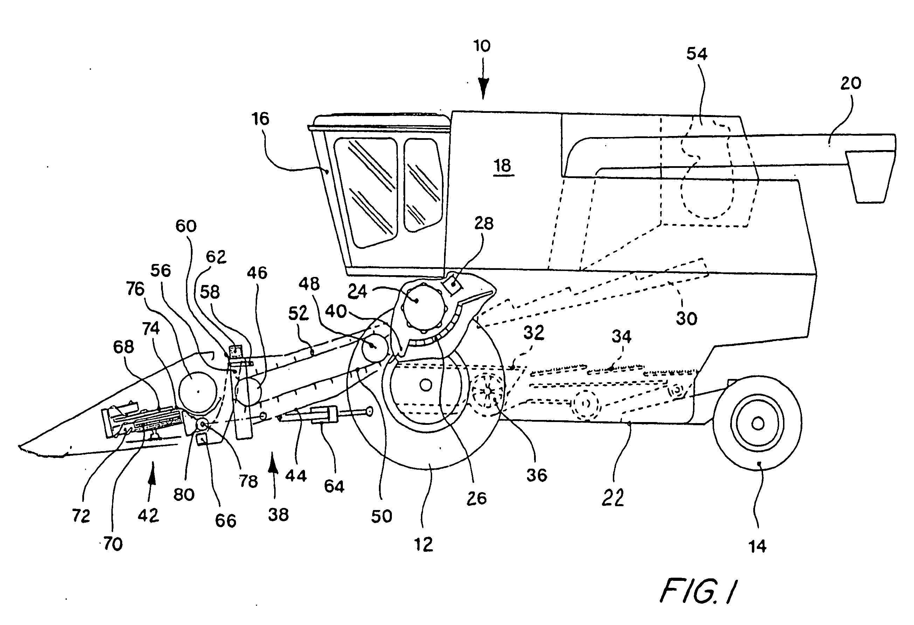

Den nachfolgenden Ausführungen ist voranzustellen, dass sich im Folgenden Richtungsangaben, wie vorn, hinten und seitlich, auf die Vorwärtsfahrtrichtung der Erntemaschine beziehen. Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Fahrgestell 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt oder einem Strohhäcksler zugeführt werden und leichte Bestandteile mittels eines Gebläses 36 von den Sieben 34 ebenfalls auf den Boden geblasen werden.

Auf dem Boden liegendes oder stehendes Gut wird über einen als Einzugsgehäuse vorgesehenen Schrägförderer 38 und eine Steinfangmulde 40 der Dreschtrommel 24 zugeführt, nachdem es von einem Erntevorsatz 42 vom Boden aufgenommen worden ist. Der Schrägförderer 38 enthält innerhalb seines Gehäuses 44 eine untere Schrägfördererwalze 46 und eine obere Schrägfördererwalze 48, um die eine Förderkette 50 umläuft, die mit Mitnehmern 52 versehen ist. Die obere Schrägfördererwalze 48 wird von einem Verbrennungsmotor 54 des Mähdreschers 10 her in an sich bekannter und daher in der Zeichnung nicht näher dargestellter Weise über Riemen angetrieben, wie auch die Dreschtrommel 24 und die Schüttler 30.

An der in Fahrtrichtung vorderen Seite des Schrägförderers 38 ist ein so genannter Pendelschild 56 angeordnet. Der Pendelschild 56 ist ein rechteckiger Rahmen, der mit der vorderen Seite des Gehäuses 44 des Schrägförderers 38 um eine etwa horizontale, sich in der Fahrtrichtung erstreckende Schwenk- oder Pendelachse 58 drehbar verbunden ist. Er dient als Befestigungseinrichtung, an der ein Rahmen 66 des Erntevorsatzes 42 abnehmbar befestigbar ist.

An der Oberseite des Pendelschilds 56 sind mehrere Halterungselemente 60 in Form von nach vorn und oben überstehender Haken befestigt. Auf der Oberseite des Pendelschilds 56 liegt außerdem ein Querträger 62 des Rahmens 66 des Erntevorsatzes 42 auf. Die Halterungselemente 60 verhindern, dass der Querträger 62 des Erntevorsatzes 42 vom Pendelschild 56 nach vorn abrutscht. Der Erntevorsatz 42 ist außerdem durch in der Zeichnung nicht dargestellte Verriegelungselemente mit der Unterseite des Pendelschilds 56 lösbar verbunden.

Der Erntevorsatz 42 ist an seinem oberen Ende um eine horizontale und quer zur Fahrtrichtung verlaufende, etwa mit der Drehachse der oberen Schrägfördererwalze 48 zusammenfallende Achse am Fahrgestell 22 schwenkbar gelagert und sein vorderes Ende ist durch einen Hydraulikzylinder 64, der sich zwischen dem unteren vorderen Ende des Gehäuses 44 des Schrägförderers 38 und dem Fahrgestell 22 erstreckt, höhenverstellbar.

Der Erntevorsatz 42 kann somit in an sich bekannter Weise vom Pendelschild 56 abgenommen werden, indem er auf einer Unterlage abgestellt, die Verriegelungselemente gelöst und der Schrägförderer 38 durch entsprechende Beaufschlagung des Hydraulikzylinders 64 weiter abgesenkt wird, so dass die Halterungselemente 60 unter dem Querträger 62 nach hinten weggezogen werden können. Die Wiederanbringung des Erntevorsatzes 42 erfolgt in umgekehrter Reihenfolge.

Bei dem Erntevorsatz 42 handelt es sich um einen Maispflücker, wie er z. B. in der DE 101 53 198 A näher beschrieben wurde. Er enthält eine Reihe von Einzugs- und Pflückeinheiten, die sich an dem Rahmen 66 abstützen, der mit dem Querträger 62 verbunden ist. Der Erntevorsatz 42 weist mehrere Einzugs- und Pflückeinrichtungen auf, die zum Einziehen von Pflanzen und zum Abtrennen ihrer Fruchtstände dienen. Die Einzugs- und Pflückeinrichtungen umfassen jeweils ein Einzugselement 68, das um eine etwa vertikal verlaufende Achse in Drehung versetzbar ist, sowie darunter angeordnete Paare von Pflückwalzen 70, von denen jeweils eine in ihrem vorderen Bereich mit Förderschnecken 72 ausgestattet ist.

Im Betrieb erfassen die Einzugselemente 68 auf dem Feld stehende Pflanzen und führen sie im Zusammenwirken mit den Förderschnecken 72 in einen Pflückspalt ein. Dort werden die Pflanzen nach unten eingezogen und die Fruchtstände mittels des Pflückspalts abgetrennt. Die Einzugselemente 68 führen die Fruchtstände auf einer Abdeckung 74 entlang und einer Querförderschnecke 76 zu, welche sie zur Mitte des Erntevorsatzes 42 fördert. Dort werden sie durch die mittige Öffnung des Pendelschilds 56 nach hinten abgegeben und durch die Mitnehmer 52 der Förderkette 50 des Schrägförderers 38 der Dreschtrommel 24 zugeführt.

Der Antrieb der beweglichen Elemente des Erntevorsatzes 42 erfolgt durch eine sich quer erstreckende Antriebswelle 78, die über zugeordnete Winkelgetriebe 80 die einzelnen Einzugs- und Pflückeinrichtungen antreibt.

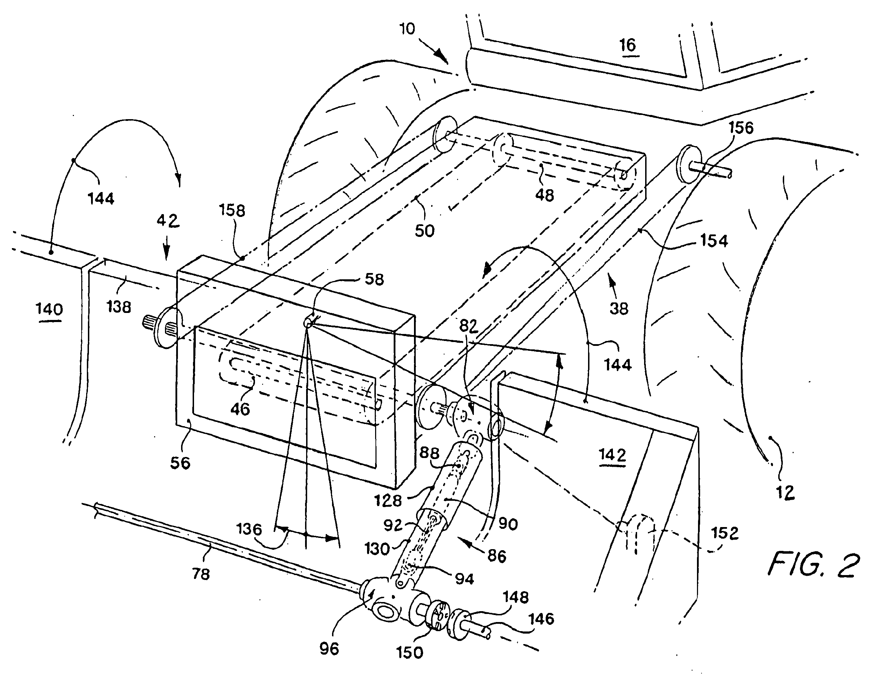

In der Figur 2 ist das Antriebssystem für den Erntevorsatz 42 perspektivisch dargestellt. Es umfasst ein erstes Winkelgetriebe 82, in das sich eine am Gehäuse 44 des Schrägförderers 38 gelagerte, erste Welle 84 hinein erstreckt. Abtriebsseitig treibt das erste Winkelgetriebe 82 eine sich in Fahrtrichtung nach vorn und vom ersten Winkelgetriebe 82 schräg nach unten erstreckende teleskopierbare Gelenkwelle 86 an, die sich aus einer ersten Gelenkverbindung in Form eines ersten Kardangelenks 88, einer Hülse 90 mit nicht-kreisförmigem Innenquerschnitt, einer in der Hülse 90 axial verschiebbar angeordneten Stange 92 mit einem dem Innenquerschnitt der Hülse 90 entsprechenden Außenquerschnitt sowie einer zweiten Gelenkverbindung in Form eines zweiten Kardangelenks 94 zusammensetzt. Das zweite Kardangelenk 94 steht mit der Eingangswelle eines zweiten Winkelgetriebes 96 in Antriebsverbindung. Durch das zweite Winkelgetriebe 96 erstreckt die horizontal und quer zur Fahrtrichtung verlaufende Antriebswelle 78 des Erntevorsatzes 42. Die Antriebswelle 78 ist starr am Rahmen 66 des Erntevorsatzes 42 gelagert.

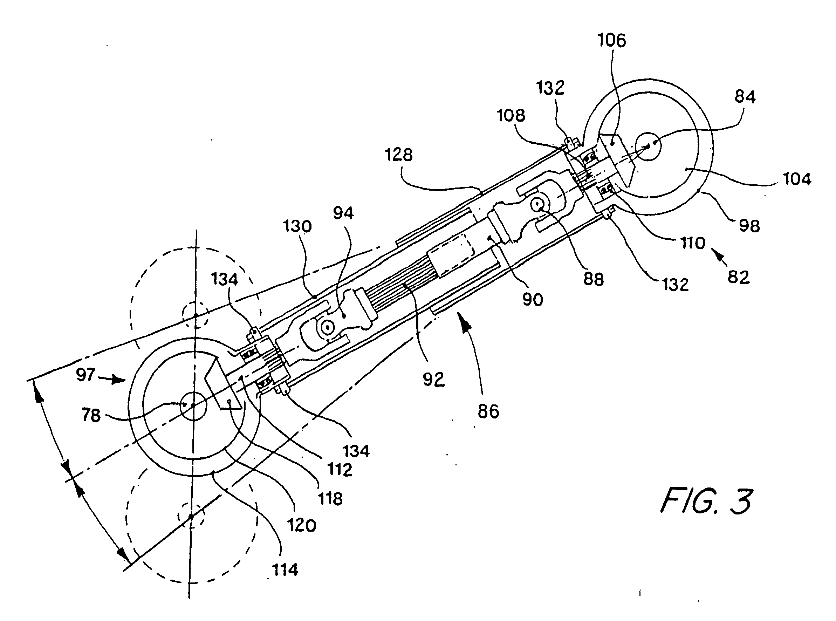

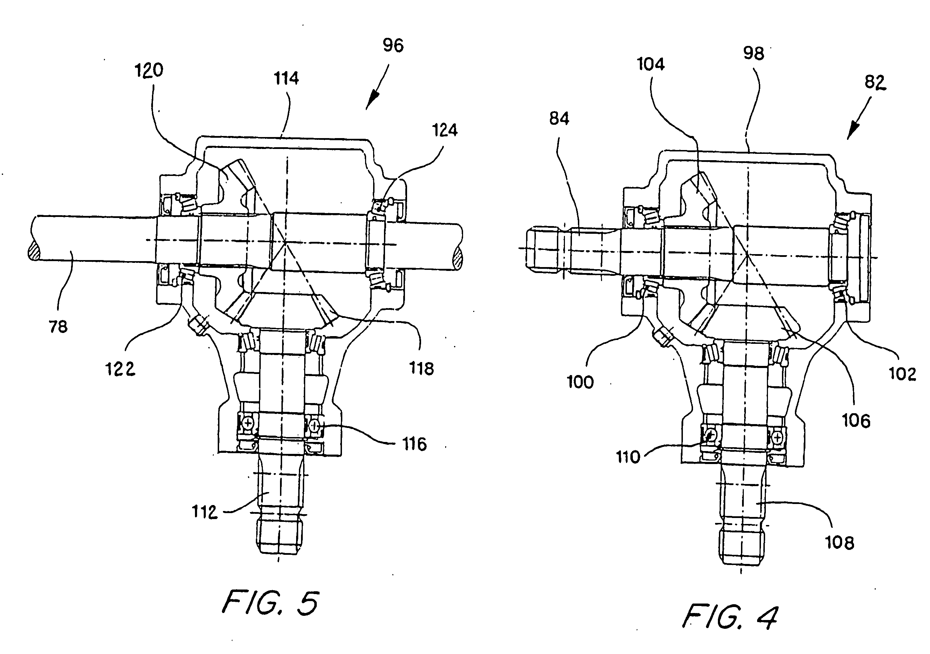

Der Aufbau und die Funktion des Antriebssystems mit der Gelenkwelle 86 und den Winkelgetrieben 82, 96 lässt sich den Figuren 3 bis 5 entnehmen. Die erste Welle 84 erstreckt sich in ein Gehäuse 98 des ersten Winkelgetriebes 82 hinein. Sie ist am Gehäuse 98 (s. Figur 4) durch zwei Kugellager 100, 102 gelagert, zwischen denen auf die erste Welle 84 ein erstes Kegelzahnrad 104 aufgesetzt ist. Das erste Kegelzahnrad 104 kämmt mit einem zweiten Kegelzahnrad 106, das auf eine als Antriebselement dienende Welle 108 aufgesetzt ist, die durch ein Kugellager 110 am Gehäuse 98 des ersten Winkelgetriebes 82 gelagert ist. Die Welle 108 ist (s. Figur 3) mit der Eingangsseite des ersten Kardangelenks 88 verbunden, dessen Ausgangsseite über die Hülse 90 und die drehfest, aber axial verschiebbar damit verbundene Stange 92 die Eingangsseite des zweiten Kardangelenks 94 antreibt. Letzteres ist ausgangsseitig mit einer als Abtriebselement vorgesehenen Welle 112 verbunden, die sich in ein Gehäuse 114 (s. Figur 5) des zweiten Winkelgetriebes 96 erstreckt, in dem sie durch ein Kugellager 116 gelagert ist. Die Welle 112 ist stirnseitig mit einem dritten Kegelrad 118 verbunden, das mit einem vierten Kegelrad 120 kämmt, welches auf der Antriebswelle 78 des Erntevorsatzes 42 sitzt. Zwischen dem Gehäuse 114 und der Antriebswelle 78 befindet sich auf beiden Seiten des vierten Kegelrads 120 jeweils ein Kugellager 124. Durch diesen Aufbau erreicht man, dass das Gehäuse 98 des ersten Winkelgetriebes 82 gegenüber der ersten Welle 84 drehbar ist und dass das Gehäuse des zweiten Winkelgetriebes 96 auf der Antriebswelle 78 drehbar befestigt ist. Das Gehäuse 98 des ersten Winkelgetriebes 82 dient als Halterung für die Welle 108 und das Gehäuse 114 des zweiten Winkelgetriebes 96 dient als Halterung für die Welle 112.

Um die Wellen 108 und 112 zumindest etwa parallel zueinander auszurichten, so dass die Kardangelenke 88, 94 nur einen begrenzten Winkelbereich der Gelenkwelle 98 aufzunehmen brauchen, ist eine Verbindungseinrichtung in Form einer Umhüllung zwischen den beiden Gehäusen 98 und 114 vorgesehen. Die Verbindungseinrichtung umfasst ein erstes Rohr 128 und ein zweites Rohr 130. Das erste Rohr 128 ist durch zwei mit dem Gehäuse 98 des ersten Winkelgetriebes 82 verbundene Zapfen 132, die entsprechende Löcher am oberen, hinteren Ende des ersten Rohrs 128 durchdringen, am Gehäuse 98 des ersten Winkelgetriebes 82 angelenkt. Die Zapfen 132 erstrecken sich in einer vertikalen Ebene und quer zur Längsachse der Gelenkwelle 86 unter- und oberhalb des Gehäuses 98 und ermöglichen ein Verschwenken des ersten Rohrs 128 um ihre Längsachsen. Analog ist das zweite Rohr 130 am Gehäuse 114 des zweiten Winkelgetriebes 98 durch Zapfen 134 angelenkt, die sich ebenfalls in einer vertikalen Ebene und quer zur Längsachse der Gelenkwelle 86 unter- und oberhalb des Gehäuses 98 erstrecken und entsprechende Öffnungen am unteren, vorderen Ende des zweiten Rohrs 130 durchdringen. Das zweite Rohr 130 hat einen Außendurchmesser, der kleiner als der Innendurchmesser des ersten Rohrs 128 ist, und ist in der Mitte der Gelenkwelle 86 in das erste Rohr 128 hineingeschoben. Die Rohre 128 und 130 überlappen sich über eine Länge, die in der dargestellten Ausführungsform etwa ein Viertel der Länge der Gelenkwelle 86 entspricht. Die Rohre 128, 130 weisen kreisförmige Querschnitte auf, so dass sie sich relativ zueinander um ihre Längsachse drehen können.

Der Antrieb der Einzugs- und Pflückeinrichtungen erfolgt somit vom Verbrennungsmotor 54 über die erste Welle 84, die über eine Kette oder einen Riemen 154 und geeignete Ritzel oder Riemenscheiben von einer oberen Antriebswelle 156 her angetrieben wird, die wiederum mit dem Verbrennungsmotor 54 in Antriebsverbindung steht, in der Regel über einen Riemenantrieb. Die erste Welle 84 treibt außerdem auf der anderen Seite des Gehäuses 44 des Schrägförderers 38 über eine weitere Kette 158 oder einen Riemen die obere Schrägfördererwalze 48 und die Förderkette 50 an. Es könnte zum Antrieb der ersten Welle 84 auch ein beliebiger anderer Antriebsstrang vom Verbrennungsmotor 54 verwendet werden, wie beispielsweise die Ausführungsform aus der DE 199 18 550 A. Der Antriebsstrang zu den Einzugs- und Pflückeinrichtungen im Erntevorsatz 42 geht weiter von der ersten Welle 84 über das erste Winkelgetriebe 82, die teleskopierbare Gelenkwelle 86, das zweite Winkelgetriebe 96, die Antriebswelle 78 und die Winkelgetriebe 80.

Beim Erntebetrieb bleibt der Erntevorsatz 42 parallel zum Erdboden ausgerichtet, da er sich auf Gleitkufen darauf abstützt bzw. durch ein aktives System mit Sensoren und Aktoren (einschließlich des Hydraulikzylinders 64 sowie eines anderen Hydraulikzylinders, der den Pendelschild 56 um die Pendelachse 58 verschwenkt) in einem konstanten Abstand oder mit einer definierten Auflagekraft über dem Erdboden geführt wird, wie an sich bekannt ist und deshalb keiner näheren Erläuterung bedarf.

Der Mähdrescher 10 ist mit einer Hangausrüstung ausgestattet, die durch eine Verstellung der Position der Räder 12 gegenüber dem Fahrgestell 22 bewirkt, dass das Fahrgestell 22 stets horizontal orientiert bleibt. Führt der Mähdrescher 10 somit einen Erntevorgang entlang eines Hanges durch, werden die Räder 12 an der hangabwärtigen Seite nach unten und die Räder 12 an der hangaufwärtigen Seite gegenüber dem Fahrgestell 22 nach oben bewegt. Die pendelnd aufgehängten hinteren Räder 14 folgen diesen Bewegungen zwangsweise. Gleichzeitig verschwenkt der Pendelschild 56 mit dem daran angebrachten Erntevorsatz 42 um die Pendelachse 58, wie durch den Pfeil 136 in der Figur 2 angedeutet wird. Dabei bewegt sich das zweite Winkelgetriebe 96 mit dem Erntevorsatz 42, da es durch die Kugellager 122, 124 an der Antriebswelle 78 fixiert ist. Das erste Winkelgetriebe 82 ist hingegen durch die Kugellager 100, 102 mit der ersten Welle 84 verbunden, die wiederum am Gehäuse 44 des Schrägförderers 38 gelagert ist. Die Bewegung des zweiten Winkelgetriebes 96 gegenüber dem ersten Winkelgetriebe 82 wird durch die teleskopierbare, mit den zwei Kardangelenken 88, 94 ausgestattete Gelenkwelle 86 ermöglicht.

Wegen der Schwenkbewegung des Erntevorsatzes 42 um die Pendelachse 58 bewegt sich das zweite Winkelgetriebe 96 beim Hangbetrieb gegenüber dem ersten Winkelgetriebe 82 auf einer kreisförmigen Bahn um die Pendelachse 58. Die Verbindungseinrichtung mit den Rohren 128, 130 bewirkt, dass die Wellen 108 und 112 parallel ausgerichtet bleiben, da die Gehäuse 98, 114 der Winkelgetriebe 82, 96 auf den zugehörigen Wellen 84 und 78 zwar in axialer Richtung der Wellen 84, 78 durch die Kugellager 100, 102, 122, 124 nicht verschiebbar, gegenüber den Wellen 84, 78 jedoch drehbar gelagert sind, und die Gehäuse 98, 114 durch die Zapfen 132, 134 und die Rohre 128, 130 miteinander gekoppelt sind. Weil das zweite Winkelgetriebe 96 sich auf einer Kreisbahn bewegt, muss die Verbindungseinrichtung nicht nur eine Abstandsänderung zwischen den Winkelgetrieben 82, 96 ermöglichen, was durch die Teleskopierbarkeit der Rohre 128, 130 gewährleistet wird, sondern auch eine Drehung der Winkelgetriebe 82, 96 erlauben. Dazu sind die Rohre 128, 130 gegeneinander verdrehbar. Die dargestellte und beschriebene Orientierung der Zapfen 132, 134 ermöglicht die Bewegung des zweiten Winkelgetriebes 96 gegenüber dem ersten Winkelgetriebe 82 in der horizontalen, quer zur Fahrtrichtung verlaufenden Richtung (d. h. nach links und rechts), die ebenfalls durch die Bewegung des zweiten Winkelgetriebes 96 auf einer Kreisbahn bedingt wird.

Durch die Verbindungseinrichtung mit den Rohren 128, 130 erreicht man, dass die Wellen 108, 112 stets parallel ausgerichtet bleiben. Die Kardangelenke 88, 94 brauchen nur die seitliche Bewegung des zweiten Winkelgetriebes 96 auszugleichen, die wesentlich kleiner als die vertikale Bewegung ist, die in Figur 3 durch die gestrichelt eingezeichneten Positionen des zweiten Winkelgetriebes 96 verdeutlicht wird. Dadurch erübrigt sich eine Verwendung von Weitwinkelgelenken in der Gelenkwelle 86. Die Verbindungseinrichtung stellt für die Gelenkwelle 86 zusätzlich einen Schutz gegen Umgebungseinflüsse bereit. Außerdem erübrigt sich eine Herstellung von unterschiedlichen Varianten von Erntevorsätzen 42 für Mähdrescher 10 mit bzw. ohne Hangausrüstung, da die Antriebswelle 78 mit der zeichnerisch dargestellten und beschriebenen Antriebsverbindung zwischen der ersten Welle 84 und der Antriebswelle 78 auch mit einer der ersten Welle 84 entsprechenden Welle von Mähdreschern ohne Hangausrüstung verbunden werden kann. In diesem Fall kann das beschriebene Antriebssystem durch eine konventionelle teleskopierbare oder starre Gelenkwelle ersetzt werden.

Anhand der Figur 2 ist weiterhin erkennbar, dass sich der Erntevorsatz 42 aus einem Mittelteil 138 und zwei Seitenteilen 140, 142 zusammensetzt, die zum Transport auf einer Straße nach oben und innen schwenkbar sind, wie durch die Pfeile 144 angedeutet wird. Die Seitenteile 140, 142 weisen Antriebswellen 146 auf, die durch Kupplungshälften 148, 150 mit der Antriebswelle 78 des Mittelteils 138 koppelbar sind. Beim Verschwenken der Seitenteile 140, 142 in die Transportposition trennen sich die Kupplungshälften 148, 150 selbsttätig auf und sie treten wieder in Antriebsverbindung, wenn die Seitenteile 140, 142 zum Erntebetrieb wieder herunter geschwenkt werden.

Die in Figur 2 dargestellte Ausführungsform des Antriebssystems des Erntevorsatzes 42 ermöglicht, - auch bei einem zur Verwendung an einem Mähdrescher 10 mit Hangausrüstung geeigneten Erntevorsatz 42 - die Seitenteile 140, 142 in die Transportposition zu verschwenken, ohne dass eine Trennung der Antriebsverbindung zwischen der ersten Welle 84 und der Antriebswelle 78 des Erntevorsatzes 42 erforderlich wäre. Der Bediener braucht somit nicht aus der Fahrerkabine 16 herunterzusteigen, um die Antriebsverbindung zu lösen, was den Übergang zwischen Erntebetriebs- und Transportstellung des Erntevorsatzes 42 wesentlich beschleunigt.

In der Figur 2 ist auch das Antriebssystem eines Erntevorsatzes 42 gemäß des Standes der Technik gestrichelt dargestellt. Es umfasst den von der ersten Welle 84 ausgehenden Anschluss, der auch vom vorliegenden Antriebssystem genutzt wird, und über eine teleskopierbare Gelenkwelle mit einem Anschluss 152 an der Außenseite des Seitenteils 142 verbunden wird. Die teleskopierbare Gelenkwelle ist erforderlich, um die Pendelbewegung des Erntevorsatzes 42 um die Pendelachse 58 zu ermöglichen. Somit ist im Stand der Technik ein Abnehmen der Gelenkwellen erforderlich, das sich durch die Erfindung erübrigt.

## Patentansprüche

1. Antriebssystem für einen Erntevorsatz (42) einer Erntemaschine (10), mit einer Gelenkwelle (86) mit variabler Länge, die an einem ersten Ende eine erste Gelenkverbindung (88) aufweist, welche über ein Antriebselement (108) mit einer ersten Welle (84), die mit einem Antriebsmotor (54) einer Erntemaschine (10) in Antriebsverbindung steht, in Antriebsverbindung bringbar ist, und an ihrem zweiten Ende eine zweite Gelenkverbindung (94) aufweist, die über ein Abtriebselement (112) mit einer Antriebswelle (78), die mit Ernteeinrichtungen des Erntevorsatzes (42) in Antriebsverbindung steht, in Antriebsverbindung bringbar ist, **gekennzeichnet durch** Mittel, die eingerichtet sind, das Antriebselement (108) und das Abtriebselement (112) zumindest näherungsweise parallel zueinander auszurichten.

2. Antriebssystem nach Anspruch 1, **dadurch gekennzeichnet, dass** das Antriebselement (108) in einer ersten Halterung drehbar gelagert ist, dass das Abtriebselement (112) in einer zweiten Halterung drehbar gelagert ist, und dass die erste Halterung und die zweite Halterung durch eine längenveränderbare Verbindungseinrichtung miteinander gekoppelt sind.

3. Antriebssystem nach Anspruch 2, **dadurch gekennzeichnet, dass** die Verbindungseinrichtung eine Drehung der ersten Halterung gegenüber der zweiten Halterung um die Längsachse der Gelenkwelle (86) erlaubt.

4. Antriebssystem nach Anspruch 2 oder 3, **dadurch gekennzeichnet**, das die erste Halterung um eine quer zur Drehachse der Gelenkwelle (86) verlaufende Achse schwenkbar gelagert ist und dass die zweite Halterung um eine dazu parallele Achse schwenkbar gelagert ist.

5. Antriebssystem nach Anspruch 4, **dadurch gekennzeichnet, dass** die Verbindungseinrichtung um jeweils eine quer zur Längsachse der Gelenkwelle (86) und quer zur Schwenkachse der Halterungen verlaufende Schwenkachse mit der ersten Halterung und der zweiten Halterung verbunden ist.

6. Antriebssystem nach einem der Ansprüche 2 bis 5, **dadurch gekennzeichnet, dass** die Verbindungseinrichtung eine zumindest die Gelenkwelle (86) umschließende Umhüllung ist, die ein erstes Teil umfasst, das mit der ersten Halterung gekoppelt ist, und ein zweites Teil, das mit der zweiten Halterung gekoppelt ist, wobei das erste Teil und das zweite Teil teleskopierbar und drehbar aneinander gelagert sind.

7. Antriebssystem nach einem der Ansprüche 1 bis 6, **dadurch gekennzeichnet, dass** die erste Welle (84) an der Vorderseite eines Einzugsgehäuses einer Erntemaschine (10) angebracht ist.

8. Antriebssystem nach einem der Ansprüche 1 bis 7, **dadurch gekennzeichnet, dass** die Drehachse der ersten Welle (84) sich horizontal und quer zur Fahrtrichtung der Erntemaschine erstreckt.

9. Antriebssystem nach einem der Ansprüche 1 bis 8, **dadurch gekennzeichnet, dass** sich die Drehachse der Antriebswelle (78) horizontal und quer zur Fahrtrichtung erstreckt.

10. Antriebssystem nach einem der Ansprüche 1 bis 9, **dadurch gekennzeichnet, dass** sich die Gelenkwelle (86) zumindest etwa in Fahrtrichtung erstreckt.

11. Erntevorsatz (42) mit einem Antriebssystem nach einem der Ansprüche 1 bis 10.

12. Erntevorsatz (42) nach Anspruch 11, **dadurch gekennzeichnet, dass** er einen mit einem Erntefahrzeug (10) verbindbaren Mittelteil (138) und wenigstens einen in eine Transportstellung beweglichen Seitenteil (140, 142) umfasst, und dass die Antriebswelle (78) am Mittelteil (138) angeordnet ist.

13. Erntemaschine (10) mit einer Antriebseinrichtung nach einem der Ansprüche 1 bis 10 und/oder einem Erntevorsatz (42) nach Anspruch 11 oder 12.

14. Erntemaschine (10) nach Anspruch 13, **dadurch gekennzeichnet, dass** der Erntevorsatz (42) um eine in Fahrtrichtung verlaufende Achse (58) pendelnd und/oder um eine horizontale, quer zur Fahrtrichtung verlaufende Achse schwenkbar an der Erntemaschine (10) angebracht ist.

## Claims

1. Drive system for a harvesting attachment (42) of a harvesting machine (10), with a variable-length propeller shaft (86) which, at a first end, has a first knuckle joint (88) which is bringable into driving connection via a drive element (108) with a first shaft (84) which is in driving connection with a drive motor (54) of a harvesting machine (10), and, at its second end, has a second knuckle joint (94) which is bringable into driving connection via a driven element (112) with a drive shaft (78) which is in driving connection with harvesting devices of the harvesting attachment (42), **characterized by** means which are provided for aligning the drive element (108) and the driven element (112) at least approximately parallel to each other.

2. Drive system according to Claim 1, **characterized in that** the drive element (108) is mounted rotatably in a first holder, **in that** the driven element (112) is mounted rotatably in a second holder, and **in that** the first holder and the second holder are coupled to each other by a length-variable connecting device.

3. Drive system according to Claim 2, **characterized in that** the connecting device permits rotation of the first holder in relation to the second holder about the longitudinal axis of the propeller shaft (86).

4. Drive system according to Claim 2 or 3,
**characterized in that** the first holder is mounted pivotably about an axis running transversely with respect to the axis of rotation of the propeller shaft (86), and **in that** the second holder is mounted pivotably about an axis parallel to said first axis.

5. Drive system according to Claim 4, **characterized in that** the connecting device is connected to the first holder and to the second holder about a pivot axis running transversely with respect to the longitudinal axis of the propeller shaft (86) and transversely with respect to the pivot axis of the holders.

6. Drive system according to one of Claims 2 to 5, **characterized in that** the connecting device is a sheath which encloses at least the propeller shaft (86) and comprises a first part which is coupled to the first holder, and a second part which is coupled to the second holder, the first part and the second part being mounted telescopically and rotatably on each other.

7. Drive system according to one of Claims 1 to 6, **characterized in that** the first shaft (84) is attached to the front side of a gathering housing of a harvesting machine (10).

8. Drive system according to one of Claims 1 to 7, **characterized in that** the axis of rotation of the first shaft (84) extends horizontally and transversely with respect to the direction of travel of the harvesting machine.

9. Drive system according to one of Claims 1 to 8, **characterized in that** the axis of rotation of the drive shaft (78) extends horizontally and transversely with respect to the direction of travel.

10. Drive system according to one of Claims 1 to 9, **characterized in that** the propeller shaft (86) extends at least approximately in the direction of travel.

11. Harvesting attachment (42) with a drive system according to one of Claims 1 to 10.

12. Harvesting attachment (42) according to Claim 11, **characterized in that** said harvesting attachment comprises a central part (138) which is connectable to a harvesting machine (10). and at least one side part (140, 142) which is movable into a transport position, and **in that** the drive shaft (78) is arranged on the central part (138).

13. Harvesting machine (10) with a drive device according to one of Claims 1 to 10 and/or a harvesting attachment (42) according to Claim 11 or 12.

14. Harvesting machine (10) according to Claim 13, **characterized in that** the harvesting attachment (42) is attached to the harvesting machine (10) in a manner oscillating about an axis (58) running in the direction of travel, and/or pivotably about a horizontal axis running transversely with respect to the direction of travel.

## Revendications

1. Système d'entraînement pour une tête de récolte (42) d'une machine de récolte (10), comprenant un arbre articulé (86) de longueur variable qui présente à une première extrémité une première liaison articulée (88), qui peut être amenée en liaison d'entraînement par le biais d'un élément d'entraînement (108) avec un premier arbre (84) qui est en liaison d'entraînement avec un moteur d'entraînement (54) d'une machine de récolte (10), et qui présente à sa deuxième extrémité une deuxième liaison articulée (94), qui peut être amenée en liaison d'entraînement par le biais d'un élément de prise de force (112) avec un arbre d'entraînement (78) qui est en liaison d'entraînement avec des dispositifs de récolte de la tête de récolte (42), **caractérisé par** des moyens qui sont prévus pour orienter l'élément d'entraînement (108) et l'élément de prise de force (112) au moins approximativement parallèlement l'un à l'autre.

2. Système d'entraînement selon la revendication 1, **caractérisé en ce que** l'élément d'entraînement (108) est monté à rotation dans une première fixation, **en ce que** l'élément de prise de force (112) est monté à rotation dans une deuxième fixation, et **en ce que** la première fixation et la deuxième fixation sont accouplées l'une à l'autre par un dispositif de liaison de longueur variable.

3. Système d'entraînement selon la revendication 2, **caractérisé en ce que** le dispositif de liaison permet une rotation de la première fixation par rapport à la deuxième fixation autour de l'axe longitudinal de l'arbre articulé (86).

4. Système d'entraînement selon la revendication 2 ou 3, **caractérisé en ce que** la première fixation est montée de manière à pouvoir pivoter autour d'un axe s'étendant transversalement à l'axe de rotation de l'arbre articulé (86), et **en ce que** la deuxième fixation est montée de manière à pouvoir pivoter autour d'un axe parallèle à celui-ci.

5. Système d'entraînement selon la revendication 4, **caractérisé en ce que** le dispositif de liaison est connecté à la première fixation et à la deuxième fixation autour d'un axe de pivotement respectif s'étendant transversalement à l'axe longitudinal de l'arbre articulé (86) et transversalement à l'axe de pivotement des fixations.

6. Système d'entraînement selon l'une quelconque des revendications 2 à 5, **caractérisé en ce que** le dispositif de liaison est une gaine entourant au moins l'arbre articulé (86), qui comprend une première partie qui est accouplée à la première fixation et une deuxième partie qui est accouplée à la deuxième fixation, la première partie et la deuxième partie étant montées l'une contre l'autre de manière télescopique et rotative.

7. Système d'entraînement selon l'une quelconque des revendications 1 à 6, **caractérisé en ce que** le premier arbre (84) est monté sur le côté avant d'un boîtier d'amenée d'une machine de récolte (10).

8. Système d'entraînement selon l'une quelconque des revendications 1 à 7, **caractérisé en ce que** l'axe de rotation du premier arbre (84) s'étend horizontalement et transversalement à la direction de conduite de la machine de récolte.

9. Système d'entraînement selon l'une quelconque des revendications 1 à 8, **caractérisé en ce que** l'axe de rotation de l'arbre d'entraînement (78) s'étend horizontalement et transversalement à la direction de conduite.

10. Système d'entraînement selon l'une quelconque des revendications 1 à 9, **caractérisé en ce que** l'arbre d'articulation (86) s'étend au moins approximativement dans la direction de conduite.

11. Tête de récolte (42) comprenant un système d'entraînement selon l'une quelconque des revendications 1 à 10.

12. Tête de récolte (42) selon la revendication 11, **caractérisée en ce qu'**elle comprend une partie centrale (138) pouvant être connectée à un véhicule de récolte (10) et au moins une partie latérale (140, 142) déplaçable dans une position de transport, et **en ce que** l'arbre d'entraînement (78) est disposé sur la partie centrale (138).

13. Machine de récolte (10) comprenant un dispositif d'entraînement selon l'une quelconque des revendications 1 à 10, et/ou une tête de récolte (42) selon la revendication 11 ou 12.

14. Machine de récolte (10) selon la revendication 13, **caractérisée en ce que** la tête de récolte (42) est montée sur la machine de récolte (10) de manière à osciller autour d'un axe (58) s'étendant dans la direction de conduite et/ou de manière à pivoter autour d'un axe horizontal s'étendant transversalement à la direction de conduite.
